# EUROPÄISCHE PATENTSCHRIFT

(11) **EP 2 134 727 B1**
(45) Veröffentlichungstag und Bekanntmachung des Hinweises auf die Patenterteilung: **02.02.2011**
(21) Anmeldenummer: 08717123.7
(22) Anmeldetag: 26.02.2008
(51) Int. Cl.: C07F 7/18, C08G 77/388

(54) **METHYLOLGRUPPEN ENTHALTENDE SILOXANE**
SILOXANES CONTAINING METHYLOL GROUPS
SILOXANES CONTENANT DES GROUPES MÉTHYLOL

(30) Priorität: 11.04.2007 DE 102007016990
(43) Veröffentlichungstag der Anmeldung: 23.12.2009
(73) Patentinhaber: Wacker Chemie AG, 81737 München (DE)
(72) Erfinder: HAGEMEISTER, Timo, 80333 München (DE); STOHRER, Jürgen, 82049 Pullach (DE)
(74) Vertreter: Fritz, Helmut
(86) Internationale Anmeldenummer: PCT/EP2008/052289
(87) Internationale Veröffentlichungsnummer: WO 2008/125379

(56) Entgegenhaltungen:
- US-A- 3 432 536

## Beschreibung

Die vorliegende Erfindung betrifft methylolierte organofunktionelle Siloxane, deren Herstellung und deren Verwendung als Beschichtungsmittel und Bindemittel.

Silicone respektive siliconhaltige Formulierungen und Komposite sind bekannt und werden in Form von Filmen, Überzügen und Beschichtungen in großen Mengen zur Modifizierung und Ausstattung verschiedenster werkstoffe und Fasern eingesetzt. In ihrem Eigenschaftsspektrum sind Silicone bzw. siliconhaltige Formulierungen rein organischen Filmen, Überzügen und Beschichtungen in vielen Belangen überlegen. So führt der Einsatz von Siliconprodukten zu einer weitgehenden Verbesserung anderweitig nicht erhältlicher aber in aller Regel erwünschter Eigenschaften wie zum Beispiel Fließverhalten, Gasdurchlässigkeit, Abriebfestigkeit, Hydrophobie, Glätte, Haptik oder Glanz des behandelten Substrates.

Ein großes Problem aller Beschichtungen, insbesondere jedoch von in ihrer Chemie limitierten Siliconbeschichtungen, ist die oftmals mangelnde Haftung auf dem jeweiligen, behandelten Substrat (sog. Permanenz der Beschichtung). Dies führt dazu, daß die Beschichtung entweder einfach mechanisch entfernt werden kann, etwa durch Reiben oder Scheuern, oder sich durch chemische Beanspruchung, etwa dem Kontakt mit verschiedenen Solventien und/oder dem Aussetzen bestimmter pH-Milieus (wie sie z.B. in Waschvorgängen auftreten), wieder vom Substrat lösen kann.

Ein Ansatz, das Problem der mangelnden Permanenz zu lösen, besteht darin, die einzelnen Siliconpolymerketten sowohl untereinander als auch mit dem zu behandelnden Substrat zu vernetzen und auf diese Weise die mechanische und chemische Widerstandsfähigkeit und damit die Permanenz des Gesamtsystems zu erhöhen.

Die Vernetzung untereinander sowie die Bindung an das Substrat können dabei sowohl durch nicht kovalente Wechselwirkungen als auch durch kovalente Bindungen erfolgen.

Unter den nicht kovalenten Wechselwirkungen haben sich dabei vor allem Wasserstoffbrückenbindungen etabliert. Diese sorgen beispielsweise ausgebildet in Form von Urethan- oder Harnstoffgruppierungen innerhalb der Gruppe der thermoplastischen Siliconelastomere untereinander für eine erhöhte Netzwerkdichte und durch Wechselwirkung mit ebenfalls wasserstoffbrückenbildenden Gruppen des Substrates (z.B. Hydroxyeinheiten bei Celluloseoberflächen) auch für eine gewisse Fixierung. Die Herstellung und Verwendung solcher thermoplasischen Siliconelastomere sind unter anderem in EP 0 606 532 A1 und EP 0 342 826 A2 ausführlich beschrieben.

Ein anderer nicht kovalenter Vernetzungsmechanismus beruht auf Säure-Base-Wechselwirkungen zwischen Lewis-basischen/Lewisaciden Gruppen des Siliconpolymers mit Lewis-aciden/Lewis-basischen Gruppen des Substrats oder des Polymers. Beispiele hierfür sind aminofunktionelle Siliconöle, welche bekanntermaßen insbesondere Hydrophobie und Weichgriff von Textilien positiv beeinflussen und aufgrund ihrer Lewis-basischen Aminofunktionalitäten die Eigenschaft haben, auf die Lewisaciden Fasern 'aufzuziehen'. Solche Siliconaminöle sowie ihre Anwendungen sind beispielsweise in EP 1555011 A beschrieben. Beiden Mechanismen ist gemein, daß ihre erzeugte Permanenz nur vorübergehend und unzureichend ist und die Beschichtung sowohl mechanisch als auch chemisch leicht wieder entfernt werden kann.

Erheblich bessere Permanenzen erzielt man dann, wenn die Fixierung von Polymer und Substrat oder Vernetzung von Polymer untereinander durch das Ausbilden kovalenter Bindungen erfolgt.

Eine kovalente Vernetzung kann beispielsweise dadurch erfolgen, daß die Siliconpolymere bereits in der Herstellung durch Verwendung von z.B. trifunktionellen Bausteinen vernetzt werden. Die so erhaltenen Polymere werden dadurch jedoch in ihren Verarbeitungseigenschaften (z.B. Schmelzviskositäten, Verformbarkeit, Löslichkeit in einem Applikationshilfsmittel) negativ beeinflußt. Auch ist eine Fixierung an das Substrat in der Regel nicht mehr möglich. Eine nachträgliche Fixierung/Vernetzung im Anschluß an eine erfolgte Applikation ist deshalb immer sinnvoller.

Eine solche nachträgliche Fixierung/Vernetzung kann beispielsweise durch die Anwesenheit von Alkoxysilylgruppen im Siliconpolymer erfolgen, welche durch Hydrolyse und Kondensation mit Hydroxygruppen des Substrats oder Hydroxygruppen anderer Siliconpolymere für eine bessere Permanenz sorgen. Solche Alkoxysilylgruppen-haltigen Siliconpolymere sind beispielsweise in EP 1544223 A1 beschrieben. Die bei der Anbindung an das Substrat entstehenden Si-O-C oder Si-O-E-Bindungen (E = Element des Substrates) sind jedoch in aller Regel hydrolyselabil und daher leicht wieder zu öffnen, wodurch eine gute Permanenz insbesondere im wäßrigen Milieu üblicherweise nicht gegeben ist. Ein Ausbilden von vergleichsweise stabilen Siloxanbindungen Si-O-Si bedarf hingegen in aller Regel wieder einer vorherigen Behandlung des Substrates mit entsprechenden Silanen.

Ein anderer Vernetzungsmechanismus, der im Bereich der rein organischen Polymere bereits bekannt ist, betrifft die sogenannte *N*-Methylolvernetzung. Dabei werden durch Copolymerisation mit geeigneten Monomeren Polymere erzeugt, welche *N*-Methylolamidgruppen tragen. Von diesen ist bekannt, daß sie bei Abwesenheit von Wasser unter erhöhter Temperatur oder bei Anwesenheit saurer Katalysatoren bereits bei niedrigeren Temperaturen kovalent an alkoholische Gruppen binden. Ebenso können sie untereinander reagieren und so eine Vernetzung des Polymers bewirken. Dabei entstehen in beiden Fällen kovalente Etherbindungen, welche bekanntermaßen sehr stark sind und nur unter extremen physikalischen oder chemischen Belastungen wieder gebrochen werden. Diesen Effekt macht sich beispielsweise EP 0 143 175 A zunutze, welche über radikalische Emulsionspolymerisation Polymerdispersionen erzeugt, welche über den eben diskutierten Methylolmechanismus nachvernetzbar sind.

*N*-Methylolamidgruppen lassen sich prinzipiell durch Umsetzung von Aminen mit Formaldehyd herstellen, in aller Regel führt die Reaktion jedoch zu polymeren Kondensationsprodukten, so daß über Iminzwischenstufen letztlich polymere Netzwerke resultieren. Diese Umsetzung von Aminen mit Formaldehyd ist bereits beschrieben: US 3461100 beschreibt Kondensationsprodukte aus Aldehyden und primären Di- und Monoaminen. Die entstehenden hochpolymeren Kondensationsprodukte werden als Schutzüberzüge diskutiert. DE 10047643 A1 beschreibt polymere Kondensationsprodukte aus Aldehyden und Siliconaminen, die jedoch ausschließlich hochpolymer und hochvernetzt vorliegen.

In beiden Schriften liegt das Produkt bereits nach Umsetzung hochpolymer vor. Es handelt sich damit nicht mehr um eine reaktive Form, wie sie das Monoadditionsprodukt eines Formaldehydmoleküls an ein Amin darstellt, und steht damit auch für Folgereaktionen an Substraten oder nachvernetzende Reaktionen untereinander nicht mehr zur Verfügung.

Im Gegensatz dazu sind Silicone, die *N*-methylolierte amidische Struktureinheiten beinhalten, grundsätzlich zu einer Nachvernetzung im oben beschriebenen Sinne befähigt.

So beschreibt US 3432536 A die *N*-Methylolierung von terminalen sowie lateralen Amidoalkyl-Polysiloxanen durch deren Behandlung mit wässriger Formaldehyd-Lösung in Gegenwart von Methanol, wodurch sowohl die entsprechenden *N*-Methylolamidoalkyl-Polysiloxane als auch die korrespondierenden *N*-Methylol-Methylether erhalten werden. Allgemein zeigen derartige Amidbasierte *N*-Methylole und deren Ether jedoch oftmals signifikant geminderte Reaktivitäten in der darauffolgenden Vernetzung und/oder Substratfixierung im Vergleich mit *N*-Methylolen, die von entsprechenden Carbamaten oder Ureaten abgeleitet sind.

Gegenstand dieser Erfindung sind *N*-Methylolgruppen aufweisende Organopolysiloxanverbindungen (M), die mindestens eine Si-C gebundene Gruppe der allgemeinen Formel (1)

**-R³-N(R⁴R⁵)** (1)

aufweisen, wobei
- **R³**: ein Zwewertiger Alkyl-, Cycloalkyl-, Alkenyl-, Aryl- oder Arylalkylrest mit jeweils 1 bis 20 C-Atomen ist, wobei die Kohlenstoffkette durch nicht benachbarte -(CO)-, -O-, -S-oder -N**R¹⁰**-Gruppen unterbrochen und gegebenenfalls mit -CN oder -Halogen substituiert sein kann;
- **R⁴**: ein -CH₂OR**⁶**-Rest oder eine -CH(OH)-Gruppe ist, die kovalent mit **R⁹** verbunden ist oder ein mit **R⁸** kovalent verbundener Alkyl-, Cycloalkyl-, Alkenyl-, Aryl- oder Arylalkylrest mit jeweils 1 bis 20 C-Atomen ist, wobei die Kohlenstoffkette durch nicht benachbarte -(CO)-, -O-, -S- oder -N**R⁹**-Gruppen unterbrochen und gegebenenfalls mit -CN oder -Halogen substituiert sein kann;
- **R⁵**: ein Alkyl-, Cycloalkyl-, Alkenyl-, Aryl- oder Arylalkylrest mit 1 bis 20 C-Atomen, eine -(CO)-O**R⁷**-Gruppe oder eine - (CO)-N**R⁸R⁹**-Gruppe ist, wobei die Kohlenstoffkette durch nicht benachbarte -(CO)-, -O-, -S- oder -N**R¹⁰**-Gruppen unterbrochen und gegebenenfalls mit -CN oder -Halogen substituiert sein kann;
- **R⁶**: ein Wasserstoffatom, ein Alkyl-, Cycloalkyl-, Alkenyl-, Aryl- oder Arylalkylrest mit 1 bis 20 C-Atomen ist, wobei die Kohlenstoffkette durch nicht benachbarte -(CO)-, -O-, - S- oder -N**R¹⁰**-Gruppen unterbrochen und gegebenenfalls mit - CN oder -Halogen substituiert sein kann;
- **R⁷**: ein Alkyl-, Cycloalkyl-, Alkenyl-, Aryl- oder Arylalkylrest mit 1 bis 20 C-Atomen ist, wobei die Kohlenstoffkette durch nicht benachbarte -(CO)-, -O-, -S- oder -N**R¹⁰-**Gruppen unterbrochen und gegebenenfalls mit -CN oder -Halogen substituiert sein kann;
- **R⁸**: ein Alkyl-, Cycloalkyl-, Alkenyl-, Aryl- oder Arylalkylrest mit 1 bis 20 C-Atomen ist, wobei die Kohlenstoffkette durch nicht benachbarte -(CO)-, -O-, -S- oder -N**R¹⁰**-Gruppen unterbrochen und gegebenenfalls mit -CN oder -Halogen substituiert sein kann und gegebenenfalls mit **R⁴** kovalent verbunden sein kann;
- **R⁹**: eine -CH₂O**R⁶**-Gruppe oder eine -CH(OH)-Gruppe ist, die kovalent mit **R⁴** verbunden ist;
- **R¹⁰**: ein Alkyl-, Cycloalkyl-, Alkenyl-, Aryl- oder Arylalkylrest mit 1 bis 20 C-Atomen ist, wobei die Kohlenstoffkette durch nicht benachbarte -(CO)-, -O-, -S- oder -N**R¹¹-**Gruppen unterbrochen und gegebenenfalls mit -CN oder -Halogen substituiert sein kann;
- **R¹¹**: ein Alkyl-, Cycloalkyl-, Alkenyl-, Aryl- oder Arylalkylrest mit 1 bis 20 C-Atomen ist;
mit der Maßgabe, daß mindestens einer der Reste **R³** oder **R⁵** in direkter Nachbarschaft zu ihrem gemeinsam gebundenen Stickstoffatom eine -(C=O)-Gruppe trägt.

Die *N*-Methylolgruppen aufweisenden Organopolysiloxanverbindungen (M) sind lagerstabil und über die *N*-Methylolgruppen der allgemeinen Formel (1) nachvernetzbar und weisen eine hervorragende Permanenz auf vielen Substraten auf. Viele Substrate benötigen dazu keine Vorbehandlung.

Vorzugsweise handelt es sich bei **R³** um zweiwertige Kohlenwasserstoffreste, besonders bevorzugt um -CH₂- und -(CH₂)₃-. Bevorzugt handelt es sich bei **R⁷** und/oder **R⁸** um Alkylreste mit jeweils 1 bis 6 C-Atomen, besonders bevorzugt um den Methylrest. Bevorzugt handelt es sich bei **R¹⁰** um Alkyl- oder Arylreste mit jeweils 1 bis 6 C-Atomen, besonders bevorzugt um den Methylrest. **R¹¹** ist vorzugsweise ein Alkylrest mit 1 bis 6 C-Atomen, insbesondere Methylrest.

Die *N*-Methylolgruppen aufweisenden Organopolysiloxanverbindungen (M) enthalten vorzugsweise Einheiten der allgemeinen Formel (2)

**RₐR²_{b}A_{c}SiO_{(4-a-b-e/2)}** (2),

wobei
- **R¹**: ein Alkyl-, Cycloalkyl-, Alkenyl-, Aryl- oder Arylalkylrest mit 1 bis 20 C-Atomen ist, wobei die Kohlenstoffkette durch nicht benachbarte -(CO)-, -O-, -S- oder -N**R¹⁰**-Gruppen unterbrochen und gegebenenfalls mit -CN oder -Halogen substituiert sein kann;
- **R²**: ein Alkyl-, Cycloalkyl-, Alkenyl-, Aryl- oder Arylalkylrest mit 1 bis 20 C-Atomen ist, wobei die Kohlenstoffkette durch nicht benachbarte -(CO)-, -O-, -S- oder -N**R¹⁰**-Gruppen unterbrochen und gegebenenfalls mit -CN oder -Halogen substituiert sein kann;
- **R¹⁰**: die vorstehenden Bedeutungen aufweist,
- **a**: 0, 1, 2 oder 3 ist,
- **b**: 0, 1, 2 oder 3 ist,
- **c**: 0, 1, 2 oder 3 ist und
- **A**: eine Gruppe der allgemeinen Formel (1) bedeutet,
mit der Maßgabe, daß die Summe **a+b+c** kleiner oder gleich 3 ist und die Organopolysiloxanverbindung mindestens eine Einheit der allgemeinen Formel (2) mit **c** verschieden Null aufweist.

Bevorzugt handelt es sich bei **R¹** um Alkyl- oder Arylreste mit jeweils 1 bis 6 C-Atomen, besonders bevorzugt um den Methyl-, Ethyl-, Vinyl- oder Phenylrest.

Bevorzugt handelt es sich bei **R²** um Alkyl- oder Arylreste mit jeweils 1 bis 6 C-Atomen; besonders bevorzugt um den Methyl-, Ethyl-, Vinyl- oder Phenylrest.
**a** ist bevorzugt 2 oder 1, **b** ist bevorzugt 0 und c ist bevorzugt 0 oder 1.

Halogenreste sind im Rahmen der vorliegenden Erfindung vorzugsweise Fluor, Chlor, Brom.

Im Rahmen der vorliegenden Erfindung werden von dem Begriff "Organopolysiloxane" sowohl polymere, oligomere wie auch dimere Siloxane mit umfasst.

Bei den *N*-Methylolgruppen aufweisenden Organopolysiloxanverbindungen (M) handelt es sich bevorzugt um im Wesentlichen lineare Polysiloxane mit endständigen und/oder seitenständigen einwertigen Resten **A** und/oder kettenständigen zweiwertigen Resten **A**, wobei **A** die obengenannte Bedeutung hat. Bei den im Wesentlichen linearen Polysiloxanen sind vorzugsweise höchstens 5 %, insbesondere höchstens 1 % der Siloxaneinheiten Verzweigungseinheiten.

Besonders bevorzugt handelt es sich bei den *N*-Methylolgruppen aufweisenden Organopolysiloxanverbindungen (M) um solche der allgemeinen Formel (3)

**AₑR¹₃₋ₑSiO-(SiR¹₂O)ₘ-(SiAR¹O)ₙ-SiR¹₃₋ₑAₑ** (3),

wobei
- **A**: und **R¹** die oben dafür angegebenen Bedeutungen haben;
- **e**: 0 oder 1 bedeutet;
- **m**: gleich 0 oder eine ganze Zahl von 1 bis 200 ist;
- **n**: gleich 0 oder eine ganze Zahl von 1 bis 200 ist und
- **m+n**: gleich 0 oder eine ganze Zahl von 1 bis 400 ist;
mit der Maßgabe, daß pro Molekül mindestens ein Rest **A** anwesend ist.

Vorzugsweise sind in der allegemeinen Formel (3) die einzelnen Einheiten (SiR¹₂O)ₘ und (SiAR¹O)ₙ im Molekül statistisch verteilt.
**m+n** ist bevorzugt 5 bis 200, besonders bevorzugt 8 bis 150.

Die Organopolysiloxanverbindungen (M) können in reiner Form sowie in Form organischer Lösungen oder wässriger Dispersionen hergestellt werden.

Ebenfalls Gegenstand der Erfindung ist ein Verfahren zur Herstellung der *N*-Methylolgruppen aufweisenden Organopolysiloxanverbindungen (M), die mindestens eine Si-C gebundene Gruppe der allgemeinen Formel (1)

**-R³-N(R⁴R⁵)** (1),

aufweisen,
bei dem Organopolysiloxan-Vorläuferverbindungen (V), die mindestens eine Gruppe der allgemeinen Formel (4)

**-R³-NHR⁵** (4),

aufweisen,
mit Aldehydreagenzien der allgemeinen Formel (5)

**O=CH-R¹²** (5),

umgesetzt werden,
wobei **R³, R⁴** und **R⁵** die vorstehenden Bedeutungen aufweisen und **R¹²** die Bedeutung von **R⁶** aufweist,
mit der Maßgabe, daß mindestens einer der Reste **R³** oder **R⁵** in direkter Nachbarschaft zu ihrem gemeinsam gebundenen Stickstoffatom eine -(C=O)-Gruppe trägt.

Die Gruppe der allgemeinen Formel (4) enthält vorzugsweise eine Harnstoff-oder Carbamat-Gruppe.

Als Aldehydreagenzien einsetzbar sind z.B. monomere Formen des Formaldehyds, wie beispielsweise Formaldehydgas sowie wäßrige oder organische Lösungen von Aldehyden, ebenso wie Formaldehyd in kondensierter Form wie beispielsweise als Paraformaldehyd, Trioxan, oder andere Aldehydkondensate. Ebenfalls kann ein Aldehydderivat wie beispielsweise Glyoxal eingesetzt werden. Vorzugsweise ist **R¹²** Wasserstoff, das bedeutet, Formaldehyd wird eingesetzt.

Die Herstellung der Vorläuferverbindungen (V) ist Stand der Technik. Die Vorläuferverbindungen (V) sind in großer Variation sowohl als Reinsubstanz, wie auch in fertigen wäßrigen Formulierungen erhältlich.

Die *N*-Methylolgruppen aufweisenden Organopolysiloxanverbindungen (M) fallen bei ihrer Herstellung entweder als Feststoffe, als Flüssigkeiten, in organischer Lösung oder in wäßriger Dispersion an.

Die Herstellung der Organopolysiloxanverbindungen (M) mit einem Aldehydreagens kann sowohl in Dispersion, in organischer Lösung als auch in Festsubstanz, kontinuierlich oder diskontinuierlich erfolgen. Bevorzugt erfolgt dabei eine optimale und homogene Durchmischung der Bestandteile unter den Reaktionsbedingungen, wobei eine Phasenunverträglichkeit zwischen den Reaktionskomponenten gegebenenfalls durch Lösungsvermittler verhindert wird.

Als Lösungsvermittler bevorzugt sind Alkohole, wie Isopropanol, Ether, wie Tetrahydrofuran und Dioxan, Kohlenwasserstoffe, wie Toluol und Xylol, chlorierte Kohlenwasserstoffe, Ketone, wie Aceton und Methylethylketon und Ester, sowie und deren Gemische. Lösungsvermittler mit einem Siedepunkt bzw. Siedebereich von bis zu 120° C bei 0,1 MPa sind bevorzugt.

Ebenfalls kann die Reaktion oftmals in wäßriger Phase durchgeführt werden, wenn die Vorläuferverbindung (V) der Organopolysiloxanverbindungen (M) ausreichend im wäßrigen Medium dispergierbar ist. Auch Mischungen aus polaren und/oder wassermischbaren organischen Lösemitteln mit Wasser sind vorteilhafte Lösemittelsysteme.

Vorzugsweise werden die Vorläuferverbindungen (V) in einem geeigneten, gegenüber dem Aldehydreagenz inerten, Lösungsmittel gelöst oder suspendiert und das Aldehydreagenz anschließend zudosiert.

Ebenfalls bevorzugt ist eine Synthese ausschließlich in Wasser, in der das zu dosierende Aldehydreagenz wäßrig ist und die Siliconkomponente in Wasser, das durch Säuren, Basen und Puffersysteme auf einen pH-Wert zwischen 6 und 9, insbesondere zwischen 7 und 8, eingestellt ist, dispergiert oder emulgiert vorliegt.

Ganz besonders bevorzugt ist die Synthese in einem wasserlöslichen Lösungsmittel oder einem Gemisch aus Wasser und einem wasserlöslichem Lösungsmittel, welches anschließend durch Lösungsmittelaustausch gegen Wasser ausgetauscht wird, wodurch man eine nachvernetzende, wäßrige Silicondispersion der *N-*Methylolgruppen aufweisende Organopolysiloxanverbindungen (M) erhält. Eine nachträgliche Emulgierung der Organopolysiloxanverbindungen (M) ist ebenfalls möglich.

Die *N*-Methylolgruppen aufweisende Organopolysiloxanverbindungen (M) eignen sich in Reinform oder als Bestandteil von Formulierungen als Bindemittel und Beschichtungsmittel für eine Vielzahl von Substraten, insbesondere Fasern und textile Flächengebilde jeglicher Art, etwa Textilfasern, Cellulosefasern, Baumwoll- und Papierfasern, ebenso wie Kunsstofffasern, die umfassen aber nicht beschränkt sind auf olefinische Fasern, Polyester-, Polyamid- oder Polyurethanfasern. Insbesondere eignen sich die N-Methylolgruppen aufweisende Organopolysiloxanverbindungen (M) für die Behandlung von protein- und proteidhaltigen Fasern und Flächengebilden, beispielsweise Haare, Leder, und Wollartikel, vorzugsweise mit dem Ziel der Verbesserung wasserabweisender Eigenschaften, Permanenz, Flexibilität und Abriebbeständigkeit in hochflexibler und stark beanspruchter Kleidung und Beiartikeln, Schuhwerk, Möbel- und Automobilbezügen. Auch sind sie zur Beschichtung von Formkörpern und Oberflächen geeignet, die in der Lage sind, mit *N*-Methylolfunktionen chemisch zu reagieren, beispielsweise Holz oder Holzverbundwerkstoffe, sowie papierbeschichtete Substrate und Formkörper.

Die Behandlung obiger Substrate mit den Organopolysiloxanverbindungen (M) in Reinform oder als Bestandteil von Formulierungen verleihen dem behandelten Substrat an seiner Oberfläche typische Siliconeigenschaften, wie zum Beispiel Hydrophobie, anti-Blocking-Effekte oder Weichgriff.

Alle vorstehenden Symbole der vorstehenden Formeln weisen ihre Bedeutungen jeweils unabhängig voneinander auf. In allen Formeln ist das Siliciumatom vierwertig.

Soweit nicht anders angegeben sind alle Mengen- und Prozentangaben auf das Gewicht bezogen, alle Drücke 0,10 MPa (abs.) und alle Temperaturen 20°C.

### Beispiele

### Übersicht der Vorläuferverbindung (V) und daraus hergestellten N-Methylolgruppen aufweisende Organopolysiloxanverbindungen (M)

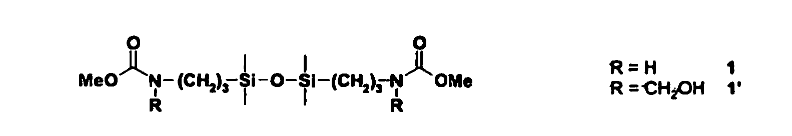

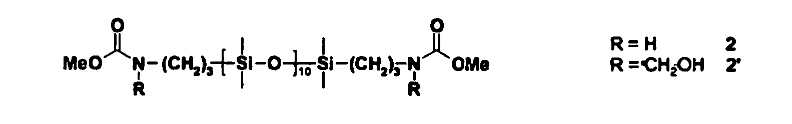

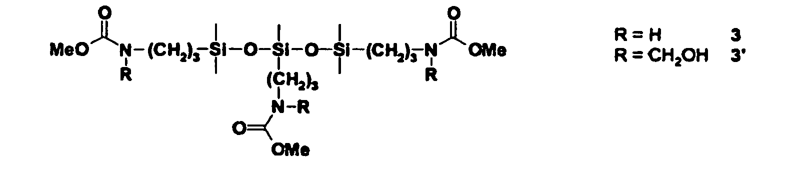

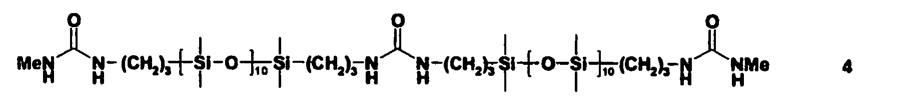

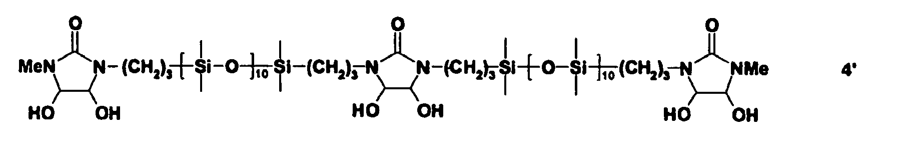

### Beispiel 1

In einem 250 mL-Rundkolben werden 50,0 g (147 mmol) des Bis(methylcarbamato)disiloxans **1** und 25,2 g (302 mmol) 36 gew.%ige wässrige Formaldehydlösung bei Raumtemperatur vorgelegt. Das Reaktionsgemisch wird über 5 h bei 90 °C gerührt. Das in Form einer wässrigen Lösung mit einem Gehalt von 57,7 g (144 mmol, 98 %) erhaltene Produkt **1'** ist bei Raumtemperatur über einige Wochen lagerstabil.

### Beispiel 2

In zum Beispiel 1 analoger Verfahrensweise werden 100 g (78,9 mmol) des Bis(methylcarbamato)oligosiloxans **2,** 20 mL Methanol und 13,3 g (160 mmol) 36 gew.%ige wässrige Formaldehydlösung bei Raumtemperatur suspendiert. Das Reaktionsgemisch wird über 8 h bei 100 °C gerührt. Produkt **2'** wird als über mehrere Wochen lagerstabile organisch-wässrige Lösung mit einem Gehalt von 97,5 g (73,4 mmol, 93 %) erhalten.

### Beispiel 3

In einer dem Beispiel 1 analogen Verfahrensweise werden 60,0 g (119 mmol) des Tri(methylcarbamato)trisiloxans **3** und 16,7 g (200 mmol) 36 gew.%ige wässrige Formaldehydlösung bei Raumtemperatur vorgelegt. Das Reaktionsgemisch wird über 6 h bei 90 °C gerührt.

Man erhält Produkt **3'** als wässrige Lösung mit einem Gehalt von 63,6 g (107 mmol, 90 %), die bei Raumtemperatur über einige Wochen lagerstabil ist.

### Beispiel 4

In einer dem Beispiel 1 analogen Verfahrensweise werden in einem 500 mL-Ründkolben 250 g (130 mmol) des Ureidosiloxans **4** mit 58,8 g (405 mmol) einer 40 gew.%igen wässrigen Glyoxal-Lösung bei Raumtemperatur versetzt. Das Reaktionsgemisch wird über 8 h bei 95 °C gerührt. Das Produkt **4'** wird in Form einer bei Raumtemperatur über Wochen lagerstabilen wässrigen Lösung mit einem Gehalt von 266 g (127 mmol, 98 %) erhalten.

### Beispiel 5

In einer offenen Kristallisierschale werden 1,33 g einer methanolisch-wässrigen Lösung des methylolierten Bis(methyl-carbamato)oligosiloxans **2'** mit einem Gehalt von 975 mg (734 µmol) Reinsubstanz **2'** über 15 min bei 140 °C eingedampft. Man erhält einen transparenten, homogenen und flexiblen Siliconfilm mit einer Schichtdicke von 2,0 mm.

## Patentansprüche

1. *N*-Methylolgruppen aufweisende Organopolysiloxanverbindungen (M), die mindestens eine Si-C gebundene Gruppe der allgemeinen Formel (1)
**-R³-N(R⁴R⁵)** (1),
aufweisen, wobei
**R³** ein zweiwertiger Alkyl-, Cycloalkyl-, Alkenyl-, Aryl- oder Arylalkylrest mit jeweils 1 bis 20 C-Atomen ist, wobei die Kohlenstoffkette durch nicht benachbarte -(CO)-, -O-, -S-oder -N**R¹⁰**-Gruppen unterbrochen und gegebenenfalls mit -CN oder -Halogen substituiert sein kann;
**R⁴** ein -CH₂O**R⁶**-Rest oder eine -CH(OH)-Gruppe ist, die kovalent mit **R⁹** verbunden ist oder ein mit **R⁸** kovalent verbundener Alkyl-, Cycloalkyl-, Alkenyl-, Aryl- oder Arylalkylrest mit jeweils 1 bis 20 C-Atomen ist, wobei die Kohlenstoffkette durch nicht benachbarte -(CO)-, -O-, -S- oder -N**R⁹**-Gruppen unterbrochen und gegebenenfalls mit -CN oder -Halogen substituiert sein kann;
**R⁵** ein Alkyl-, Cycloalkyl-, Alkenyl-, Aryl- oder Arylalkylrest mit 1 bis 20 C-Atomen, eine -(CO)-O**R⁷**-Gruppe oder eine - (CO)-N**R⁸R⁹**-Gruppe ist, wobei die Kohlenstoffkette durch nicht benachbarte -(CO)-, -O-, -S- oder -N**R¹⁰**-Gruppen unterbrochen und gegebenenfalls mit -CN oder -Halogen substituiert sein kann;
**R⁶** ein Wasserstoffatom;
**R⁷** ein Alkyl-, Cycloalkyl-, Alkenyl-, Aryl- oder Arylalkylrest mit 1 bis 20 C-Atomen ist, wobei die Kohlenstoffkette durch nicht benachbarte -(CO)-, -O-, -S- oder -N**R¹⁰**-Gruppen unterbrochen und gegebenenfalls mit -CN oder -Halogen substituiert sein kann;
**R⁸** ein Alkyl-, Cycloalkyl-, Alkenyl-, Aryl- oder Arylalkylrest mit 1 bis 20 C-Atomen ist, wobei die Kohlenstoffkette durch nicht benachbarte -(CO)-, -O-, -S- oder -N**R¹⁰**-Gruppen unterbrochen und gegebenenfalls mit -CN oder -Halogen substituiert sein kann und gegebenenfalls mit **R⁴** kovalent verbunden sein kann;
**R⁹** eine -CH₂OR**⁶**-Gruppe oder eine -CH(OH)-Gruppe ist, die kovalent mit **R⁴** verbunden ist;
**R¹⁰** ein Alkyl-, Cycloalkyl-, Alkenyl-, Aryl- oder Arylalkylrest mit 1 bis 20 C-Atomen ist, wobei die Kohlenstoffkette durch nicht benachbarte -(CO)-, -O-, -S- oder -N**R¹¹**-Gruppen unterbrochen und gegebenenfalls mit -CN oder -Halogen substituiert sein kann;
**R¹¹** ein Alkyl-, Cycloalkyl-, Alkenyl-, Aryl- oder Arylalkylrest mit 1 bis 20 C-Atomen ist;
mit der Maßgabe, daß mindestens einer der Reste **R³** oder **R⁵** in direkter Nachbarschaft zu ihrem gemeinsam gebundenen Stickstoffatom eine -(C=O)-Gruppe trägt.

2. Organopolysiloxanverbindungen (M) nach Anspruch 1, die Einheiten der allgemeinen Formel (2)
**R¹ₐR²_{b}A_{c}SiO_{(4-a-b-c/2)}** (2),
enthalten, wobei
**R¹** ein Alkyl-, Cycloalkyl-, Alkenyl-, Aryl- oder Arylalkylrest mit 1 bis 20 C-Atomen ist, wobei die Kohlenstoffkette durch nicht benachbarte -(CO)-, -O-, -S- oder -N**R¹⁰**-Gruppen unterbrochen und gegebenenfalls mit -CN oder -Halogen substituiert sein kann;
**R²** ein Alkyl-, Cycloalkyl-, Alkenyl-, Aryl- oder Arylalkylrest mit 1 bis 20 C-Atomen ist, wobei die Kohlenstoffkette durch nicht benachbarte -(CO)-, -O-, -S- oder -N**R¹⁰**-Gruppen unterbrochen und gegebenenfalls mit -CN oder -Halogen substituiert sein kann;
**R¹⁰** die in Anspruch 1 angegebenen Bedeutungen aufweist,
**a** 0, 1, 2 oder 3 ist,
**b** 0, 1, 2 oder 3 ist,
**c** 0, 1, 2 oder 3 ist und
**A** eine Gruppe der allgemeinen Formel (1) gemäss Anspruch 1 bedeutet,
mit der Maßgabe, daß die Summe **a+b+c** kleiner oder gleich 3 ist und die Organopolysiloxanverbindung mindestens eine Einheit der allgemeinen Formel (2) mit **c** verschieden Null aufweist.

3. Organopolysiloxanverbindungen (M) nach Anspruch 1 oder 2, nämlich Organopolysiloxanverbindungen (M) der allgemeinen Formel (3)
**AₑR¹₃₋ₑSiO-(SiR¹₂O)ₘ-(SiAR¹O)ₙ-SiR¹₃₋ₑAₑ** (3),
wobei **A** und **R¹** die in Anspruch 2 angegebenen Bedeutungen aufweisen;
**e** 0 oder 1 bedeutet;
**m** gleich 0 oder eine ganze Zahl von 1 bis 200 ist;
**n** gleich 0 oder eine ganze Zahl von 1 bis 200 ist und
**m+n** gleich 0 oder eine ganze Zahl von 1 bis 400 ist;
mit der Maßgabe, daß pro Molekül mindestens ein Rest A anwesend ist.

4. Verfahren zur Herstellung der *N*-Methylolgruppen aufweisenden Organopolysiloxanverbindungen (M), die mindestens eine Si-C gebundene Gruppe der allgemeinen Formel (1)
**-R³-N(R⁴R⁵)** (1),
aufweisen,
bei dem Organopolysiloxan-Vorläuferverbindungen (V), die mindestens eine Gruppe der allgemeinen Formel (4)
**-R³-NHR⁵** (4),
aufweisen,
mit Aldehydreagenzien der allgemeinen Formel (5)
**O=CH-R¹²** (5),
umgesetzt werden,
wobei **R³, R⁴** und **R⁵** die in Anspruch 1 angegebenen Bedeutungen aufweisen und **R¹²** die Bedeutung von **R⁶** aufweist,
mit der Maßgabe, daß mindestens einer der Reste **R³** oder **R⁵** in direkter Nachbarschaft zu ihrem gemeinsam gebundenen Stickstoffatom eine -(C=O)-Gruppe trägt.

5. Verfahren nach Anspruch 4, bei dem **R¹²** Wasserstoff bedeutet.

6. Verwendung der *N*-Methylolgruppen aufweisenden Organopolysiloxanverbindungen (M) gemäss Anspruch 1 bis 3 als Beschichtungsmittel und Bindemittel.

7. Verwendung nach Anspruch 6 für Textilfasern, textile Flächengebilde und Leder.

## Claims

1. Organopolysiloxane compounds (M) comprising *N-*methylol groups and at least one Si-C-attached group of the general formula (1)
**-R³-N(R⁴R⁵)** (1),
where
**R³** is a divalent alkyl, cycloalkyl, alkenyl, aryl or arylalkyl radical having in each case from 1 to 20 carbon atoms wherein the carbon chain may be interrupted by nonadjacent -(CO)-, -O-, -S-or -N**R¹⁰**- groups and optionally substituted with -CN or -halogen;
**R⁴** is a -CH₂OR⁶ radical or a -CH(OH)- group which is covalently attached to **R⁹** or is an alkyl, cycloalkyl, alkenyl, aryl or arylalkyl radical which is covalently attached to **R⁸** and has in each case from 1 to 20 carbon atoms, wherein the carbon chain may be interrupted by nonadjacent -(CO)-, -O-, -S- or -N**R⁹**- groups and optionally substituted with -CN or -halogen;
**R⁵** is an alkyl, cycloalkyl, alkenyl, aryl or arylalkyl radical having from 1 to 20 carbon atoms, a -(CO)-O**R**⁷ group or -(CO)-N**R⁸R⁹** group wherein the carbon chain may be interrupted by nonadjacent -(CO)-, -O-, -S- or -N**R**¹⁰- groups and optionally substituted with -CN or -halogen;
**R**⁶ is a hydrogen atom;
**R**⁷ is an alkyl, cycloalkyl, alkenyl, aryl or arylalkyl radical having from 1 to 20 carbon atoms wherein the carbon chain may be interrupted by nonadjacent -(CO)-, -O-, -S- or -N**R**¹⁰- groups and optionally substituted with -CN or -halogen;
**R**⁸ is an alkyl, cycloalkyl, alkenyl, aryl or arylalkyl radical having from 1 to 20 carbon atoms wherein the carbon chain may be interrupted by nonadjacent -(CO)-, -O-, -S- or -N**R**¹⁰- groups and optionally substituted with -CN or -halogen and optionally covalently attached to **R**⁴;
**R**⁹ is a -CH₂OR**⁶** group or a -CH(OH)- group which is covalently attached to **R⁴;**
**R**¹⁰ is an alkyl, cycloalkyl, alkenyl, aryl or arylalkyl radical having from 1 to 20 carbon atoms wherein the carbon chain may be interrupted by nonadjacent -(CO)-, -O-, -S- or -N**R**¹¹- groups and optionally substituted with -CN or -halogen;
**R**¹¹ is an alkyl, cycloalkyl, alkenyl, aryl or arylalkyl radical having from 1 to 20 carbon atoms;
with the proviso that at least one of **R**³ and **R**⁵ bears a -(C=O)- group in direct adjacency to their shared nitrogen atom.

2. Organopolysiloxane compounds (M) according to Claim 1 containing units of the general formula (2)
**R¹ₐR²_{b}A_{c}SiO_{(4-a-b-c/2)}** (2),
where
**R¹** is an alkyl, cycloalkyl, alkenyl, aryl or arylalkyl radical having from 1 to 20 carbon atoms wherein the carbon chain may be interrupted by nonadjacent -(CO)-, -O-, -S- or -N**R**¹⁰- groups and optionally substituted with -CN or -halogen;
**R²** is an alkyl, cycloalkyl, alkenyl, aryl or arylalkyl radical having from 1 to 20 carbon atoms wherein the carbon chain may be interrupted by nonadjacent -(CO)-, -O-, -S- or -N**R**¹⁰- groups and optionally substituted with -CN or -halogen;
**R**¹⁰ has the meanings recited in Claim 1,
**a** is 0, 1, 2 or 3,
**b** is 0, 1, 2 or 3,
**c** is 0, 1, 2 or 3, and
**A** is a group of the general formula (1) according to Claim 1,
with the proviso that the sum total of **a+b+c** is not more than 3 and the organopolysiloxane compound has at least one unit of the general formula (2) where **c** is other than zero.

3. Organopolysiloxane compounds (M) according to Claim 1 or 2, viz. organopolysiloxane compounds (M) of the general formula (3)
**AₑR¹₃₋ₑSiO-(SiR¹₂O)ₘ-(SiAR¹O)ₙ-SiR¹₃₋ₑAₑ** (3),
where **A** and **R**¹ have the meanings recited in Claim 2;
**e** is 0 or 1;
**m** is 0 or a whole number from 1 to 200;
**n** is 0 or a whole number from 1 to 200; and
**m+n** is 0 or a whole number from 1 to 400;
with the proviso that at least one **A** radical is present per molecule.

4. Process for preparing the organopolysiloxane compounds (M) comprising *N*-methylol groups and at least one Si-C-attached group of the general formula (1)
**-R³-N(R⁴R⁵)** (1),
which comprises reacting organopolysiloxane precursor compounds (V) comprising at least one group of the general formula (4)
**-R³-NHR⁵** (4),
with aldehyde reagents of the general formula (5)
**O=CH-R¹²** (5),
where **R³, R⁴** and **R⁵** have the meanings recited in Claim 1 and **R¹²** has the meaning of **R⁶,**
with the proviso that at least one of **R³** and **R⁵** bears a -(C=O)- group in direct adjacency to their shared nitrogen atom.

5. Process according to Claim 4 wherein **R¹²** is hydrogen.

6. Use of the *N*-methylolyl-containing organopolysiloxane compounds (M) according to Claim 1 to 3 as coating and binder.

7. Use according to Claim 6 for textile fibers, textile fabrics and leather.

## Revendications

1. Composés d'organopolysiloxane (M) comportant des groupes *N*-méthylol, qui comportent au moins un groupe lié à Si-C de formule générale (1)
-R³-N(R⁴R⁵) (1),
R³ étant un radical alkyle, cycloalkyle, alcényle, aryle ou arylalkyle bivalent qui contient à chaque fois 1 à 20 atomes C, la chaîne carbonée pouvant être interrompue par des groupes -(CO)-, -O-, -S- ou -NR¹⁰-non voisins et éventuellement substituée avec -CN ou -halogène ;
R⁴ étant un radical -CH₂OR⁶ ou un groupe -CH(OH), qui est relié par une liaison covalente avec R⁹, ou un radical alkyle, cycloalkyle, alcényle, aryle ou arylalkyle relié par une liaison covalente avec R⁸, qui contient à chaque fois 1 à 20 atomes C, la chaîne carbonée pouvant être interrompue par des groupes -(CO)-, -O-, -S- ou -NR⁹- non voisins et éventuellement substituée avec -CN ou -halogène ;
R⁵ étant un radical alkyle, cycloalkyle, alcényle, aryle ou arylalkyle qui contient 1 à 20 atomes C, un groupe -(CO)-OR⁷ ou un groupe -(CO)-NR⁸R⁹, la chaîne carbonée pouvant être interrompue par des groupes -(CO)-, -O-, -S- ou -NR¹⁰- non voisins et éventuellement substituée avec -CN ou -halogène ;
R⁶ étant un atome d'hydrogène ;
R⁷ étant un radical alkyle, cycloalkyle, alcényle, aryle ou arylalkyle qui contient 1 à 20 atomes C, la chaîne carbonée pouvant être interrompue par des groupes -(CO)-, -O-, -S- ou -NR¹⁰- non voisins et éventuellement substituée avec -CN ou -halogène ;
R⁸ étant un radical alkyle, cycloalkyle, alcényle, aryle ou arylalkyle qui contient 1 à 20 atomes C, la chaîne carbonée pouvant être interrompue par des groupes -(CO)-, -O-, -S- ou -NR¹⁰- non voisins et éventuellement substituée avec -CN ou -halogène et pouvant éventuellement être reliée par une liaison covalente avec R⁴ ;
R⁹ étant un groupe -CH₂OR⁶ ou un groupe -CH(OH), qui est relié par une liaison covalente avec R⁴ ;
R¹⁰ étant un radical alkyle, cycloalkyle, alcényle, aryle ou arylalkyle qui contient 1 à 20 atomes C, la chaîne carbonée pouvant être interrompue par des groupes -(CO)-, -O-, -S- ou -NR¹¹- non voisins et éventuellement substituée avec -CN ou -halogène ;
R¹¹ étant un radical alkyle, cycloalkyle, alcényle, aryle ou arylalkyle qui contient 1 à 20 atomes C ;
à condition qu'au moins un des radicaux R³ ou R⁵ porte un groupe -(C=O) au voisinage direct de leur atome d'azote lié en commun.

2. Composés d'organopolysiloxane (M) selon la revendication 1, qui contiennent des unités de formule générale (2)
R¹ₐR²_{b}A_{c}SiO_{(4-a-b-c/2)} (2),
R¹ étant un radical alkyle, cycloalkyle, alcényle, aryle ou arylalkyle qui contient 1 à 20 atomes C, la chaîne carbonée pouvant être interrompue par des groupes -(CO)-, -O-, -S- ou -NR¹⁰- non voisins et éventuellement substituée avec -CN ou -halogène ;
R² étant un radical alkyle, cycloalkyle, alcényle, aryle ou arylalkyle qui contient 1 à 20 atomes C, la
chaîne carbonée pouvant être interrompue par des groupes -(CO)-, -O-, -S- ou -NR¹⁰- non voisins et éventuellement substituée avec -CN ou -halogène ;
R¹⁰ présentant les significations données dans la revendication 1,
a étant 0, 1, 2 ou 3,
b étant 0, 1, 2 ou 3,
c étant 0, 1, 2 ou 3 et
A signifiant un groupe de formule générale (1) selon la revendication 1,
à condition que la somme a+b+c soit inférieure ou égale à 3 et que le composé d'organopolysiloxane comporte au moins une unité de formule générale (2) avec c différent de zéro.

3. Composés d'organopolysiloxane (M) selon la revendication 1 ou 2, à savoir composés d'organopolysiloxane (M) de formule générale (3)
AₑR¹₃₋ₑSiO-(SiR¹₂O)ₘ-(SiAR¹O)ₙ-SiR¹₃₋ₑAₑ (3),
A et R¹ présentant les significations données dans la revendication 2 ;
e signifiant 0 ou 1 ;
m étant 0 ou un nombre entier de 1 à 200 ;
n étant 0 ou un nombre entier de 1 à 200 et
m+n étant 0 ou un nombre entier de 1 à 400 ;
à condition qu'au moins un radical A soit présent par molécule.

4. Procédé de fabrication des composés d'organopolysiloxane (M) comportant des groupes *N-*méthylol, qui comportent au moins un groupe lié à Si-C de formule générale (1)
-R³-N(R⁴R⁵) (1),
dans lequel des composés précurseurs d'organopolysiloxane (V), qui comportent au moins un groupe de formule générale (4)
-R³-NHR⁵ (4),
sont mis en réaction avec des réactifs aldéhyde de formule générale (5)
O=CH-R¹² (5),
R³, R⁴ et R⁵ présentant les significations données dans la revendication 1 et R¹² présentant la signification de R⁶,
à condition qu'au moins un des radicaux R³ ou R⁵ porte un groupe -(C=O)- au voisinage direct de leur atome d'azote lié en commun.

5. Procédé selon la revendication 4, dans lequel R¹² signifie l'hydrogène.

6. Utilisation des composés d'organopolysiloxane comportant des groupes *N*-méthylol (M) selon les revendications 1 à 3 en tant qu'agents de revêtement et liants.

7. Utilisation selon la revendication 6 pour des fibres textiles, des structures textiles plates et du cuir.
